# EUROPEAN PATENT SPECIFICATION

(11) **EP 2 630 402 B1**
(45) Date of publication and mention of the grant of the patent: **10.04.2019**
(21) Application number: 11834682.4
(22) Date of filing: 21.10.2011
(51) Int. Cl.: F02M 21/10, F02M 31/125, F02M 37/00, B65D 88/74

(54) **MEANS FOR SUPPLYING OIL FROM A TANK CONTAINING HEAVY FUEL OIL**
MITTEL ZUM ZUFÜHREN VON ÖL AUS EINEM TANK MIT SCHWERÖL
MOYEN PERMETTANT DE FOURNIR DE L'HUILE À PARTIR D'UN RÉSERVOIR CONTENANT DU MAZOUT LOURD

(30) Priority: 22.10.2010 NO 20101448
(43) Date of publication of application: 28.08.2013
(73) Proprietor: Englan AS, 8140 Inndyr (NO)
(72) Inventor: VALLE, Ketil, N-9024 Thomasjord (NO)
(74) Representative: Olsen, Svein Arne
(86) International application number: PCT/NO2011/000299
(87) International publication number: WO 2012/053900

(56) References cited:
- CN-Y- 2 425 052
- CN-Y- 2 903 646
- CN-Y- 2 903 647
- CN-Y- 201 225 765
- DE-A1- 3 323 031
- DE-A1-102008 003 290
- DE-U1-202006 010 615
- JP-U- S5 141 116
- JP-U- S5 772 398
- JP-U- S5 863 199
- JP-U- 57 072 398

## Description

The present invention is related to means for supplying fuel from a tank containing heavy fuel oil. (Heating of oil in order to increase its pump ability / decrease its viscosity.)

It is well known that heavy fuel oil ship engine fuel normally is too viscous for pumping from a storage tank to another and smaller intermediate storage tank unless the fuel is heated, which may be performed by external heating. Transfer pumping to a smaller intermediate storage tank is necessary in order to be able to purify the heavy fuel oil before submitting the fuel oil to engines for consume. The purification process is normally done by pump transferring heavy fuel oil from one intermediate storage tank (so called settling tank) which is much smaller than the storage tank and thereafter through a purifier and further to another intermediate small size tank (service tank) in which the fuel oil is stored ready for consume. JPS 5863199U shows an example of such an intermediate storage tank.

In order to keep the fuel in the storage tank ready for pumping, the fuel storage bulk temperature needs to be kept higher than ambient temperature normally by external heat supply, such as by heating coils in the tanks. Concentrated heat supply, e.g. by heating coils, in a larger storage volume will cause convective flows in the storage volume as the heated oil will have less specific density than the colder adjacent oil. The result of such temperature gradients in an enclosed oil volume is a certain flow of warmer oil upwards and a corresponding flow of colder oil downwards in the entire tank volume.

A heating arrangement of concentrated heating coils in a larger volume thus requires significant heat supply since the entire tank volume will to a certain degree be heated even though only a smaller part of the larger volume will be pumped out of the tank.

The transfer pumping from large size storage tank to the small size intermediate storage tank is normally done one or two times a day and it is therefore normal to continuously supply heat to a storage tank from which oil is pumped one or more times a day. Heated oil will flow upwardly and to the sides whereas oil pumped out from the tank still will have a low temperature in spite the heating process, leading to a high energy loss.

With the means for transferring fuel from a tank containing heavy fuel oil to a consumer such as a combustion engine according to the present invention, the energy loss is substantially reduced, which means are defined by the features stated in the patent claims.

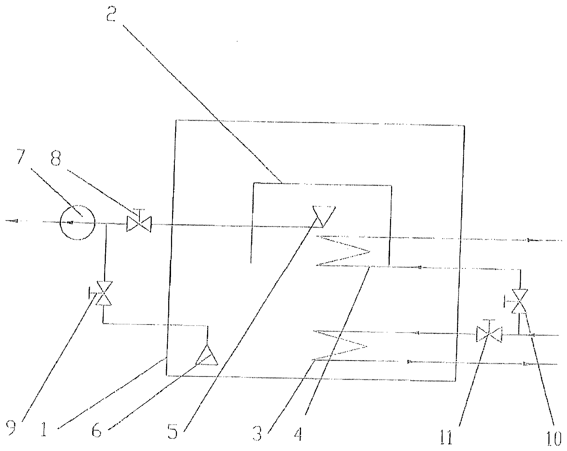

The only figure of the drawing discloses a schematic side view of a means according to one embodiment of the present invention.

A fuel storage tank 1 for storage of heavy fuel oil such as is used in ship engines comprises a heating medium transferring heat to the heavy fuel oil by a first heating coil 3. The tank further comprises a first suction device 6 for transporting oil to a transfer pump 7 through a valve 9. According to the invention a collector 2 having the form of a hat or a cap with an open bottom, is arranged above said first heating coil 3 capturing heated oil flowing upwardly from the first heating coil 3. The collector 2 comprises a second suction device 5 from which heated oil is transferred by the transfer pump 7 through a valve 8.

In another embodiment disclosed in the drawing the collector 2 is arranged in the storage tank 1 without freely from the heating coil 3, however with a separate second heating coil 4 inside the collector 2. The heating coils 3 and 4 normally are coils with steam or thermal oil as heating medium. The collector 2 will capture heated oil flowing upwardly from the second heating coil 4.

Preferably a valve 11 is installed in the heating circuit to the first heating coil 3 and a further valve 10 is installed in the circuit to the second heating coil 4 for controlling the temperature in the tank generally and within the collector 2 especially. The collector 2 preferably comprises smaller holes in the upper surface to let possible air gathered in the collector 2 to escape into the storage tank 1.

The collector 2 prevents convective flows of heated oil out to the volume of the storage tank 1 from the collector 2 which oil is transferred away from the collector 2 by the second suction device 5 and the transfer pump 7.

To control the temperature in different parts of the storage tank 1, valves 10 and 11 as well as valves 8 and 9 can be operated as well as a general first suction device 6 in the storage tank 1. This makes it possible to monitor and regulate the temperature of the fuel oil within the collector 2 as well as in the storage tank 1 and especially in the second suction device 5.

Routines can be established for interval heating of small volumes only before planned oil transfer operation, thus keep heating requirement for the collector 2 to a minimum. It is to be understood that any fuel oil transfer operation will be a planned operation. With the present invention it is made possible to keep the temperature of the storage tank 1 lower than the temperature that is required for pumping the heavy fuel oil, and with this invention the heating amount required for fuel heating during ship operation is significantly reduced.

The invention is intended for marine heavy fuel oil storage tanks for the purpose of reducing necessary heating in the storage tank 1 prior to and during transfer of fuel oil from the storage tank 1, however the means according to the invention may be utilized for stationary installations as well.

The collector 2 with the second heating coil 4 allows sufficient fuel oil to flow from the storage tank 1 to the transfer pump 7. The oil within the collector 2 is heated to a temperature where the oil is suitable for pumping. The transfer pump 7 is suctioning oil from the collector 2, thus creating a certain pressure difference between the volume of the collector 2 and the storage volume of the storage tank 1. Temperature sensors may be fitted in collector 2 as well as in the storage tank 1 at suitable places. Such sensors will make it possible to monitor the temperature of the fuel oil in the small size volume of the collector 2 and in the adjacent storage volume of the storage tank 1 as well and make suitable operations of the valves 8, 9, 10 and 11 to optimize the operation.

## Claims

1. Means for supplying oil from a storage tank (1) containing heavy fuel oil by heating oil to increase flowability / decrease viscosity,
wherein said means comprises a collector (2) arranged above at least a part of a heating device such as at least one heating coil (3, 4) within said storage tank (1), said collector (2) having the shape of a hat or a cap with an open bottom, said collector (2) thereby collecting heated oil ascending from the at least one heating coil (3, 4), whereby heated oil in the collector (2) being captured by a suction device (5) within the collector (2) to be transported to a consumer outside the storage tank (1) by a transfer pump (7), ***characterized in that*** the suction device (5) is arranged above the at least one heating coil (3, 4).

2. Means according to claim 1, ***characterized in that** a* heating coil (4) being arranged within the collector (2).

3. Means according to claims 1 or 2, ***characterized in that*** the upper surface of the collector (2) comprises holes allowing possible air gathered in the collector (2) to escape.

## Patentansprüche

1. Mittel zum Fördern von Öl aus einem Schweröl enthaltenden Speichertank (1) durch Erhitzen des Öls, um die Fließfähigkeit zu erhöhen/die Viskosität zu senken,
wobei das Mittel einen Sammler (2) umfasst, der über mindestens einem Teil einer Heizeinrichtung, etwa mindestens einer Heizspule (3, 4) innerhalb des Speichertanks (1) angeordnet ist, der Sammler (2) die Form eines Huts oder einer Kappe mit einer offenen Unterseite aufweist, der Sammler (2) dadurch erhitztes Öl sammelt, das von der mindestens einen Heizspule (3, 4) aufsteigt, wodurch das erhitzte Öl in dem Sammler (2) von einer Saugeinrichtung (5) innerhalb des Sammlers (2) eingefangen wird, das von einer Förderpumpe (7) an einen Verbraucher außerhalb des Speichertanks (1) zu transportieren ist, ***dadurch gekennzeichnet, dass*** die Saugeinrichtung (5) über der mindestens einen Heizspule (3, 4) angeordnet ist.

2. Mittel nach Anspruch 1, ***dadurch gekennzeichnet, dass*** eine Heizspule (4) in dem Sammler (2) angeordnet ist.

3. Mittel nach Anspruch 1 oder 2, ***dadurch gekennzeichnet, dass*** die Oberfläche des Sammlers (2) Löcher umfasst, durch die Luft, die sich eventuell in dem Sammler (2) gesammelt hat, entweichen kann.

## Revendications

1. Moyen permettant de fournir du pétrole brut à partir d'un réservoir de stockage (1) contenant du mazout lourd en chauffant le pétrole brut afin d'augmenter la fluidité/de diminuer la viscosité,
ledit moyen comprenant un collecteur (2) disposé au-dessus d'au moins une partie d'un dispositif de chauffage tel qu'au moins un serpentin de chauffage (3, 4) dans ledit réservoir de stockage (1), ledit collecteur (2) ayant la forme d'un chapeau ou d'un bouchon doté d'un fond ouvert, ledit collecteur (2) collectant ainsi le pétrole brut chauffé montant de l'au moins un serpentin de chauffage (3, 4), le pétrole brut chauffé dans le collecteur (2) étant ainsi capturé par un dispositif d'aspiration (5) dans le collecteur (2) pour être transporté vers un consommateur à l'extérieur du réservoir de stockage (1) au moyen d'une pompe de transfert (7), ***caractérisé en ce que*** le dispositif d'aspiration (5) est disposé au-dessus de l'au moins un serpentin de chauffage (3, 4).

2. Moyen selon la revendication 1, ***caractérisé en ce qu'**un* serpentin de chauffage (4) est disposé dans le collecteur (2).

3. Moyen selon la revendication 1 ou 2, ***caractérisé en ce que*** la surface supérieure du collecteur (2) comprend des orifices permettant l'évacuation d'air éventuellement accumulé dans le collecteur (2).
